# EUROPÄISCHE PATENTANMELDUNG

(11) **EP 1 442 966 A1**
(43) Veröffentlichungstag der Anmeldung: **04.08.2004**
(21) Anmeldenummer: 03100198.5
(22) Anmeldetag: 31.01.2003
(51) Int. Cl.: B62D 27/02, B62D 29/00

(54) **Verfahren zum Verbinden zweier Fahrzeugrahmenteile**

(71) Anmelder: Ford Global Technologies, Inc., A subsidiary of Ford Motor Company, Dearborn, Michigan 48126 (US)
(72) Erfinder: Sweeney, Kevin Eugene, Dr., 52072 Aachen (DE); Porschen, Peter, 50170 Kerpen (DE); Stadtler, Arnold, 50935 Koeln (DE); Baumann, Matthias, 52070 Aachen (DE)
(74) Vertreter: Drömer, Hans-Carsten, Dr.-Ing.

(57) **Zusammenfassung**

Die Erfindung bezieht sich auf ein Verfahren zum Verbinden zweier Fahrzeugrahmenteile 11 für Fahrzeuge aller Art, insb. für Kraftfahrzeuge, wobei die Fahrzeugrahmenteile 11 zum Aufbau einer Fahrzeugtragrahmenanordnung 10 mit wesentlichen Bestandteilen aus extrudierten Profilen 12 ausgebildet sind. Es werden dabei die einzelnen Fahrzeugrahmenteile 11 vor ihrer Verbindung bereits teilweise oder vollständig bearbeitet und/oder ausgerüstet und die anschließende Verbindung der einzelnen Fahrzeugrahmenteile 11 wird durch elektromagnetisches Fügen erzeugt.

## Beschreibung

Die Erfindung bezieht sich auf ein Verfahren zum Verbinden zweier Fahrzeugrahmenteile für Fahrzeuge aller Art, insb. für Kraftfahrzeuge, wobei die Fahrzeugrahmenteile zum Aufbau einer Fahrzeugtragrahmenanordnung mit wesentlichen Bestandteilen aus extrudierten Profilen ausgebildet sind.

Aus dem Stand der Technik sind verschiedene Verfahren zum Verbinden zweier Fahrzeugrahmenteile für Fahrzeuge aller Art, insb. für Kraftfahrzeuge, bekannt. Bei den bekannten Verfahren bestehen dabei die Teile insb. der Fahrzeugkarosserie zumeist aus geformtem Stahl, wobei die einzelnen Komponenten meist über Schweißverbindungen, Bolzen, Schrauben od. dgl. oder auch z.B. über Klebeverbindungen zusammengehalten werden. Bei den bekannten Verfahren sowie bei der Herstellung z.B. von Fahrzeugen allgemein ergab sich durch äußere Einflüsse wie Umwelteinflüsse od. dgl. das Erfordernis, immer leichtere Fahrzeuge herstellen zu müssen, wodurch die Hersteller auf eine Verwendung anderer Materialien wie Aluminium oder Magnesium angewiesen waren. Dadurch ergab sich für die Produktion von Karosseriekörpern z.B. für Fahrzeuge die Tragrahmen-Technik (Spaceframe- Technik), die im wesentlichen aus extrudierten Profilen gebildet wird. Es steht dabei insb. das Problem der Verbindung der extrudierten Profile im Vordergrund, bei den bekannten Lösungen werden zumeist Schweißverbindungen oder Schraubenverbindungen verwendet.

Aus dem Stand der Technik sind ferner auch andere Verbindungstechniken in Verbindung mit Hilfs- oder Tragrahmenkonstruktionen für Fahrzeuge bekannt, wie z.B. Magnetumformung oder elektromagnetisches Verbinden. So ist z.B. aus der DE 199 22 800 A1 ein Hilfsrahmen für ein Kraftfahrzeug sowie ein Verfahren zur Herstellung eines Hilfsrahmens bekannt, bei dem eine Verbindung einzelner Rahmenkomponenten z.B. durch Magnetumformung erfolgen kann. Es besteht dabei der Hilfsrahmen, beispielsweise ein Hinterachsträger für ein Kraftfahrzeug, aus Querund Längsträgern, die über Knotenelemente aus einem Leichtmetall- Gußwerkstoff miteinander verbunden sind. An die Knotenelemente sind Aufnahmen für Radlenker sowie Aufnahmen für Lagerelemente zur Anbindung des Hilfsrahmens an den Fahrzeugaufbau integriert. Die Verbindung der Knotenelemente mit den Trägern erfolgt durch Verschweißung oder in einer bevorzugten Ausführungsform durch Formschluß mittels Magnetumformung. Die Träger selbst können aus einem längsnahtverschweißten Rohr aus einer Leichtmetall- Legierung gebildet werden, das mit Hilfe des Innenhochdruckumform- Verfahrens nach vorangegangenem Zwischenglühen kaltumgeformt ist. Alternativ können die Träger auch aus einem Kunststoffmaterial bestehen. Durch diese Anordnung bzw. das entsprechende Verfahren sollen sich vielfältige Formgebungsmöglichkeiten ergeben bei gleichzeitig hoher Festigkeit und Steifigkeit. Ferner soll eine hohe Maßgenauigkeit der eingesetzten Rohre gegeben sein und die Herstellkosten sollen niedrig sein.

Bei der Verbindung von Trägern und Knotenelement durch Magnetummformung sollen sich weitere Vorteile ergeben; durch dieses Verfahren wird berührungslos durch ein impulsartig aufgebrachtes Magnetfeld im Bereich der Verbindungsstelle in zumindest einem der Verbindungselemente ein Strom induziert, der ein entgegengesetzt dem aufgebrachten Magnetfeld gerichtetes Magnetfeld erzeugt, wodurch eine impulsartige Kaltumformung erfolgt. Durch diese Verbindungstechnik soll eine hohe, reproduzierbare Maßhaltigkeit der Verbindung sowie wegen der Berührungslosigkeit eine sehr gute Oberflächenqualität erreicht werden. Außerdem wird die Möglichkeit geschaffen, unterschiedliche Materialien miteinander zu verbinden, von denen lediglich eine Komponente aus einem elektrisch gut leitenden Material bestehen muß, es sollen dabei durch die Kaltumformung im Unterschied zu Schweißverbindungen keine Gefügeveränderungen im Verbindungsbereich entstehen, die eine Festigkeitsminderung bewirken könnten. Das beschriebene Magnetumform- Verfahren kann dabei z.B. bei der erwähnten Tragrahmen- Technik (Spaceframe- Technik) angewendet werden. Nachteilig ist bei diesem bekannten Verfahren insb. die eingeschränkte Anwendbarkeit z.B. auch aufgrund der schlechten Zugänglichkeit der Fügestellen, es ist dabei insgesamt aufgrund der bestehenden Anforderungen nach mehr Modularität erforderlich, die bekannten Verfahren mit einer nur geringen Erhöhung der Temperatur in einem Kaltverbindungsprozeß hinsichtlich der Verbindung vorgefertigter Karosserieteile oder Module zu verbessern.

Es ist ferner aus der US 5 966 813 A ein Verfahren zum Verbinden zweier Fahrzeugrahmenkomponenten bekannt, bei dem eine Verbindung einzelner Rahmenkomponenten durch elektromagnetisches Verbinden erfolgt. Das hier beschriebene Verfahren dient zum Verbinden zweier Fahrzeugrahmenkomponenten, die aus unterschiedlichem Material bestehen. Dabei wird eine erste Rahmenkomponente und eine zweite Rahmenkomponente vorgesehen, die aus einem im Vergleich zur ersten Komponente unterschiedlichen Material besteht, wobei eine dieser beiden Komponenten als eine metallische Komponente ausgebildet ist. Ein Teilbereich einer der beiden Komponenten ist innerhalb eines Teilbereiches der jeweiligen anderen Komponente in einer überlappenden Weise angeordnet, wodurch ein Überlappungsbereich gebildet wird. Weiterhin ist ein metallisches Band um diesen Überlappungsbereich herum angeordnet, und um dieses metallische Band herum ist ein Induktor angeordnet. Dieser Induktor wird dabei derart mit elektrischer Energie beaufschlagt, um ein magnetisches Feld zum Verformen des metallischen Bandes im Überlappungsbereich zu erzeugen, und zwar mit einer Geschwindigkeit, die ausreichend ist, um das metallische Band und die metallische Komponente elektromagnetisch miteinander zu verbinden, so daß die beiden Rahmenkomponenten gegeneinander gesichert sind. Es kann sich dabei bei den Rahmenkomponenten z.B. um die Längs- und Querträgerelemente eines Fahrzeuges handeln, wobei z.B. beide Komponenten aus metallischen Werkstoffen bestehen können, oder aber auch z.B. der Längsträger aus metallischem Werkstoff und der Querträger aus einer Legierung bestehen kann. Mit diesem Verfahren soll erreicht werden, daß ein Verbinden der Rahmenkomponenten zur Bildung einer Fahrzeugrahmenanordnung durchgeführt werden kann, bei der die einzelnen Komponenten aus alternativen Materialien bestehen können, insb. aus solchen Komponenten unterschiedlichen Materials, wie z.B. metallisches und nichtmetallisches Material. Bei diesem Verfahren kann bei einer Ausführungsform die Bildung der elektromagnetischen Verbindung unter Zuhilfenahme eines einsetzbaren Dornes erzeugt werden, der im wesentlichen zur Stützung der zu verbindenden Komponenten oder Teilen davon während des elektromagnetischen Verbindungsvorganges dient, hierbei können auch noch andere zur Stützung dienende Haltemittel zum Einsatz kommen. Auch das hier beschriebene Verfahren beschränkt sich im wesentlichen auf die Verbindung einzelner Rahmenkomponenten zur Bildung einer Fahrzeugrahmenanordnung, nachteilig ist auch bei diesem bekannten Verfahren insb. die eingeschränkte Anwendbarkeit. Daraus ergibt sich auch in diesem Falle bei einem Streben nach mehr Modularität das Erfordernis, das bekannte Verfahren mit einer nur geringen Erhöhung der Temperatur in einem Kaltverbindungsprozeß hinsichtlich der Verbindung vorgefertigter Karosserieteile oder Module zu verbessern.

Schließlich ist aus der US 6 255 631 B1 eine Vorrichtung und ein Verfahren zum Verbinden zweier oder mehrerer Fahrzeugkomponenten zwecks Bildung einer Verbindung für eine Fahrzeugkarosserie bekannt. Die Karosserie- Anordnung kann dabei ein Paar von längsverlaufenden Trägerelementen mit einer Vielzahl von sich zwischen diesen erstreckenden Querträgern umfassen. Wenigstens einer der Längsträger umfaßt einen nach innen verformten Bereich um so eine Montagemöglichkeit zu schaffen, die zur Aufnahme des Endes eines der Querträger dient. Der Montagebereich ist dabei bevorzugt derart ausgebildet, daß er einen ersten Bereich mit einem relativ großen Durchmesser umfaßt, der etwas größer im Durchmesser als der äußere Durchmesser des Endes des Querträgers ist, und einen zweiten Bereich mit einem relativ kleinen Durchmesser, der nur ein kleines bißchen größer im Durchmesser als der äußere Durchmesser des Endes des Querträgers ist. Ein interner magnetischer Induktor zur elektromagnetischen Verbindung wird dann in den Querträger eingeführt, um ein starkes elektromagnetisches Feld zu erzeugen. Dieses elektromagnetische Feld wirkt derart auf das Ende des Querträgers ein, daß dieses nach außen hin expandiert, um dadurch mit dem ersten und zweiten Bereich des Montagebereiches des Längsträgers in Eingriff zu kommen, und zwar mit einer hohen Geschwindigkeit. Es wird durch dieses Zusammenwirken des Endes des Querträgers mit dem Montagebereich des Längsträgers ein Teilbereich des Endes des Querträgers und der Montagebereich des Längsträgers zusammengeschweißt oder molekular miteinander verbunden, während ein anderer Teilbereich des Endes des Querträgers und der Montagebereich des Längsträgers mechanisch aneinanderoder ineinandergreifen, um eine Verbindung für eine Fahrzeugkarosserie zu bilden. Bezüglich der Ausbildung der Verbindungsstelle sind dabei eine Vielzahl von unterschiedlichen Ausgestaltungsmöglichkeiten vorgesehen. Mit dem hier beschriebenen Verfahren sollen insb. die Nachteile der konventionellen Schweißtechniken vermieden werden, die sich neben einer unerwünschten Wärmeoder Hitzeentwicklung insb. bzgl. des Verbindens unterschiedlicher metallischer Materialien ergeben sowie auch bzgl. des Verbindens von Komponenten unterschiedlicher Dicke. Bei diesem Verfahren ergeben sich ebenfalls Nachteile insb. hinsichtlich einer eingeschränkten Anwendbarkeit, da auch hier im wesentlichen nur einzelne Rahmenkomponenten zur Bildung einer Fahrzeugkarosserie verbunden werden. Daraus ergibt sich auch hier das Erfordernis, das bekannte Verfahren mit einer nur geringen Erhöhung der Temperatur in einem Kaltverbindungsprozeß hinsichtlich der Verbindung vorgefertigter Karosserieteile oder Module zu verbessern.

Ausgehend von diesen bekannten Verfahren zum Verbinden zweier Fahrzeugrahmenteile für Fahrzeuge aller Art, insb. für Kraftfahrzeuge, liegt der Erfindung die Aufgabe zugrunde, die bekannten Verfahren unter Beibehaltung der bisherigen Vorteile in der Weise zu verbessern bzw. weiterzuentwickeln, daß die Nachteile der zuvor diskutierten Lösungen vermieden werden, wobei es insb. möglich sein soll, vorgefertigte Karosserieteile oder Module für eine Fahrzeugrahmenanordnung ohne eine deutliche Erhöhung der Temperatur in einem Kaltverbindungsprozeß auf einfache und funktionsgerechte Weise miteinander zu verbinden.

Diese Aufgabe wird erfindungsgemäß dadurch gelöst, daß die einzelnen Fahrzeugrahmenteile vor ihrer Verbindung bereits teilweise oder vollständig bearbeitet und/oder ausgerüstet werden und daß die anschließende Verbindung der einzelnen Fahrzeugrahmenteile durch elektromagnetisches Fügen erzeugt wird. Auf diese Weise wird erstmalig mit einfachen Mitteln die Möglichkeit geschaffen, die bereits teilweise oder vollständig bearbeiteten und/oder ausgerüsteten Fahrzeugrahmenteile in einem Kaltverbindungsprozeß einfach und funktionsgerecht miteinander zu verbinden. Da das erfindungsgemäße Verfahren im wesentlichen bei Raumtemperatur stattfindet, nicht kontaktbehaftet ist und sich insb. bei dreidimensionalen Bauteilevariationen sehr gut anwenden läßt, ist es besonders gut für die Verbindung von vorgefertigten Fahrzeugrahmenteilen zum Aufbau von Fahrzeugtragrahmenanordnungen einsetzbar. Das erfindungsgemäße Verfahren ist dabei einfach und funktionsgerecht durchführbar und außerdem vielseitig anwendbar.

Bei der bevorzugten Ausführungsform der vorliegenden Erfindung wird durch das elektromagnetische Fügen eine Verbindung der einzelnen Fahrzeugrahmenteile aus extrudierten Aluminium- Profilen erzeugt. Es läßt sich dieses Verfahren bei der Herstellung von Aluminiumtragrahmenstrukturen besonders vorteilhaft anwenden, wobei insb. die hohe elektrische Leitfähigkeit des Aluminiums in diesem Fall vorteilhaft ist, wobei mit steigender Leitfähigkeit des Materials das Verfahren um so effektiver wird.

Nach einem weiteren bevorzugten Ausgestaltungsmerkmal der vorliegenden Erfindung empfiehlt es sich, daß die Verbindung der einzelnen Fahrzeugrahmenteile durch elektromagnetisches Fügen unter Verwendung eines zusätzlichen, beim elektromagnetischen Fügen expandierenden Verbindungselementes erfolgt. Dabei empfiehlt es sich, daß die Verbindung der einzelnen Fahrzeugrahmenteile durch elektromagnetisches Fügen unter Verwendung eines als verankertes Dorn element ausgebildeten zusätzlichen Verbindungselementes erfolgt. Durch diese Unterstützung des Verbindens der beiden Komponenten durch das als verankertes Dornelement ausgebildete zusätzliche Verbindungselement wird eine vorherige Bearbeitung der zu verbindenden Komponenten, u.a. z.B. der A- oder B- Säule, im wesentlichen überflüssig, weiterhin ergeben sich Erleichterungen bzgl. der Ausführung der Toleranzen.

Es empfiehlt sich nach einem weiteren Ausgestaltungsmerkmal der vorliegenden Erfindung, daß die A- und/oder B- Säule einer Fahrzeugkarosserie durch elektromagnetisches Fügen an dem Fahrgestellrahmen des Fahrzeuges befestigt wird. Für diese Verbindungsart ist das erfindungsgemäße Verfahren besonders gut geeignet. Dabei empfiehlt es sich, daß das zusätzliche Verbindungselement beim elektromagnetischen Fügen sowohl in der A- und/oder B- Säule als auch in dem Fahrgestellrahmen expandiert. Es kann dabei bei einer ersten Ausführungsform das Expandieren des zusätzlichen Verbindungselementes beim elektromagnetischen Fügen sowohl in der A- und/oder B- Säule als auch in dem Fahrgestellrahmen sequentiell erfolgen; bei einer anderen, alternativen Ausführungsform kann das Expandieren des zusätzlichen Verbindungselementes beim elektromagnetischen Fügen sowohl in der A- und/oder B- Säule als auch in dem Fahrgestellrahmen gleichzeitig erfolgen.

Es empfiehlt sich nach einem weiteren Ausgestaltungsmerkmal der vorliegenden Erfindung, daß die A- und/oder B- Säule mit einem solchen Querschnitt versehen wird, der zur leichten Aufnahme des zusätzlichen Verbindungselementes vor dem Expandieren beim elektromagnetischen Fügen geeignet ist. Dabei wird zweckmäßig der Fahrgestellrahmen im Verbindungsbereich mit wenigstens einer Ausnehmung versehen, die zur Aufnahme des zusätzlichen Verbindungselementes vor dem Expandieren beim elektromagnetischen Fügen geeignet ist. Da der Vorgang des elektromagnetischen Fügens relativ unempfindlich ist, ist ein derartiges Positionieren des zusätzlichen Verbindungselementes in den Profilen der zu verbindenden Komponenten unkritisch. Es empfiehlt sich dabei außerdem, daß der Fahrgestellrahmen im wesentlichen im Verbindungsbereich mit einer Anzahl im wesentlichen horizontal verlaufender Wände versehen wird, so daß die Verbindung eine hohe Festigkeit erhält.

Nach einem weiteren Ausgestaltungsmerkmal der vorliegenden Erfindung kann das zusätzliche Verbindungselement vor dem elektromagnetischen Fügen zusammen mit der A- und/oder B- Säule in den Fahrgestellrahmen eingesetzt werden. Es erhält dadurch die Verbindungsstelle eine größere Steifigkeit.

Es empfiehlt sich nach einem weiteren Ausgestaltungsmerkmal der vorliegenden Erfindung, daß als zusätzliches Verbindungselement eine extrudierte Hülse, bevorzugt aus Aluminium, vorgesehen wird, die beim elektromagnetischen Fügen in dem jeweiligen Profil expandiert. Eine solche Hülse läßt sich einfach in die zu verbindenden Komponenten einsetzen, wobei sich nach dem Expandieren der Hülse in dem Profil gleichzeitig eine gute Torsionsfestigkeit ergibt.

Nach einem weiteren Ausgestaltungsmerkmal der vorliegenden Erfindung empfiehlt es sich, daß durch die Steganordnung in der A- und/oder B- Säule ein Expandieren des zusätzlichen Verbindungselementes an bestimmten Umfangsbereichen verhindert wird, wodurch sich ein Ineinandergreifen von A- und/oder B- Säule und zusätzlichem Verbindungselement ergibt.

Es empfiehlt sich außerdem, daß der Fahrgestellrahmen derart vorgefertigt wird, daß das zusätzliche Verbindungselement und ggfs. die A- und/oder B- Säule von oben her gesehen angebracht werden können, wobei bevorzugt zunächst das zusätzliche Verbindungselement in den Fahrgestellrahmen eingesetzt wird und danach die A-und/oder B- Säule auf das zusätzliche Verbindungselement aufgesetzt wird.

Nach einem weiteren Ausgestaltungsmerkmal der vorliegenden Erfindung wird das Betätigungselement für das elektromagnetische Fügen in das zusätzliche Verbindungselement zu dessen Expandieren in der A- und/oder B- Säule und in dem Fahrgestellrahmen eingeführt. Dabei können bei einer Ausführungsform beide Verbindungen, A- und/oder B- Säule mit zusätzlichem Verbindungselement bzw. Fahrgestellrahmen mit zusätzlichem Verbindungselement, in derselben Bearbeitungsvorrichtung gleichzeitig erzeugt werden. Bei einer anderen Ausführungsform können beide Verbindungen, A- und/oder B- Säule mit zusätzlichem Verbindungselement bzw. Fahrgestellrahmen mit zusätzlichem Verbindungselement, separat in derselben Bearbeitungsvorrichtung oder in unterschiedlichen Bearbeitungsvorrichtungen erzeugt werden.

Nach einem weiteren Merkmal der vorliegenden Erfindung ist vorgesehen, daß die A-Säule einer Fahrzeugkarosserie durch elektromagnetisches Fügen an dem in einer Instrumententafel integrierten Querträger eines Fahrzeuges befestigt wird. Dabei wird das zusätzliche Verbindungselement durch die A- S äule hindurch in den Querträger eingesetzt und dort durch Expandieren beim elektromagnetischen Fügen fixiert. Dabei ergibt sich eine saubere und schnelle Verbindung mit einer hohen Steifigkeit ohne die Verwendung von Befestigungsmitteln wie Schrauben od. dgl., die im übrigen auch klapperfrei ist.

Nach einem weiteren Merkmal der vorliegenden Erfindung ist vorgesehen, daß die einzelnen zu verbindenden Fahrzeugrahmenteile vor dem elektromagnetischen Fügen fertig lackiert werden, d.h. es erübrigt sich nach dem Verbinden eine diesbezügliche Nachbehandlung.

In entsprechender Weise ist nach einem anderen Merkmal der vorliegenden Erfindung vorgesehen, daß die einzelnen zu verbindenden Fahrzeugrahmenteile vor dem elektromagnetischen Fügen fertig mit Verkleidungselementen versehen werden, so daß sich auch hier nach dem Verbinden eine diesbezügliche Nachbehandlung erübrigt.

Nach einem weiteren Merkmal der vorliegenden Erfindung ist vorgesehen, daß zusätzlich zu der Verbindung der einzelnen Fahrzeugrahmenteile durch elektromagnetisches Fügen eine Verbindung der einzelnen Fahrzeugrahmenteile durch Verklebung erzeugt wird. Diese zusätzliche Verbindung über eine Verklebung ist in mehrerer Hinsicht vorteilhaft, so bildet die Verklebung als Verbindungsart eine einheitliche Lösung für die zu verbindenden Teile in einer sauberen und kalten, d.h. ohne Wärme produzierenden, Weise, weiterhin ergibt sich hier durch das zusätzliche Vorsehen e iner Verklebung an der Verbindungsstelle eine verbesserte Steifigkeit, Festigkeit, sowie verbesserte Alterungseigenschaften und verbesserte Crash-Eigenschaften im Vergleich zu anderen Arten der Verbindung. Es kann dabei bei einer bevorzugten Variante dieser Ausführungsform die zusätzliche Verbindung der einzelnen Fahrzeugrahmenteile durch Verklebung vor der Erzeugung der Verbindung der einzelnen Fahrzeugrahmenteile durch elektromagnetisches Fügen erzeugt werden , bei einer alternativen Variante dieser Ausführungsform kann die zusätzliche Verbindung der einzelnen Fahrzeugrahmenteile durch Verklebung nach der Erzeugung der Verbindung der einzelnen Fahrzeugrahmenteile durch elektromagnetisches Fügen erzeugt werden.

Es empfiehlt sich nach einem weiteren Ausgestaltungsmerkmal dieser Ausführungsform, daß die zusätzliche Verbindung der einzelnen Fahrzeugrahmenteile durch Verklebung unter Zuführung eines Einkomponenten-Klebemittels erfolgt. Alternativ oder ergänzend kann nach einem anderen Ausgestaltungsmerkmal dieser Ausführungsform die zusätzliche Verbindung der einzelnen Fahrzeugrahmenteile durch Verklebung unter Zuführung eines Mehrkomponenten- Klebemittels erfolgen.

Nach einem letzten Ausgestaltungsmerkmal der vorliegenden Erfindung ist vorsehen, daß zusätzlich zu der Verbindung der einzelnen Fahrzeugrahmenteile durch elektromagnetisches Fügen eine Verbindung der einzelnen Fahrzeugrahmenteile durch eine andere Verbindungsart, wie z.B. Schrauben, Nieten, Schweißen od. dgl. erzeugt wird. Auch hierdurch lassen sich insb. die Steifigkeits- und Festigkeitseigenschaften an der Verbindungsstelle sowie die Funktionseigenschaften des Gesamtaufbaus im allgemeinen verbessern.

Die Erfindung ist in den Figuren der Zeichnung in mehreren Ausführungsbeispielen dargestellt. Es zeigen:
- Fig. 1: eine schematische Teil- Schnittansicht durch eine nach dem erfindungsgemäßen Verfahren hergestellte Verbindungsstelle A- Säule - Fahrgestellrahmen mit einem zusätzlichen Verbindungselement,
- Fig. 2: eine schematische, explosionsartige Darstellung einer Fahrzeugtragrahmenanordnung vor dem Zusammenfügen nach dem erfindungsgemäßen Verfahren,
- Fig. 3: eine schematische, perspektivische Darstellung einer Fahrzeugtragrahmenanordnung nach dem Zusammenfügen nach dem erfindungsgemäßen Verfahren,
- Fig. 4: eine schematische, perspektivische Teilansicht der nach dem erfindungsgemäßen Verfahren hergestellten Verbindungsstelle A-Säule - Fahrgestellrahmen mit zusätzlichem Verbindungselement,
- Fig. 5: eine schematische Draufsicht auf die Verbindungsstelle A- Säule-Fahrgestellrahmen mit zusätzlichem Verbindungselement gemäß Fig. 4,
- Fig. 6: eine schematische Schnittansicht durch einen Fahrgestellrahmen mit einer ersten Querschnittsform mit angedeutetem zusätzlichen Verbindungselement,
- Fig. 7: eine schematische Schnittansicht durch einen Fahrgestellrahmen mit einer zweiten Querschnittsform mit angedeutetem zusätzlichen Verbindungselement,
- Fig. 8: eine schematische Schnittansicht durch einen Fahrgestellrahmen mit einer dritten Querschnittsform mit angedeutetem zusätzlichen Verbindungselement,
- Fig. 9: eine schematische, perspektivische Teilansicht einer nach dem erfindungsgemäßen Verfahren herzustellenden Verbindungsstelle A-Säule - Querträger in Instrumententafel mit angedeutetem einzusetzenden zusätzlichen Verbindungselement und angedeutetem Betätigungselement für das elektromagnetische Fügen.

Die nach dem erfindungsgemäßen Verfahren aufgebaute Fahrzeugtragrahmenanordnung ist generell mit 10 bezeichnet. Das erfindungsgemäße Verfahren dient dabei zum Verbinden zweier mit 11 bezeichneter Fahrzeugrahmenteile für Fahrzeuge aller Art, insb. für Kraftfahrzeuge. Dabei sind die Fahrzeugrahmenteile 11 zum Aufbau der Fahrzeugtragrahmenanordnung 10 mit wesentlichen Bestandteilen aus extrudierten Profilen 12 ausgebildet.

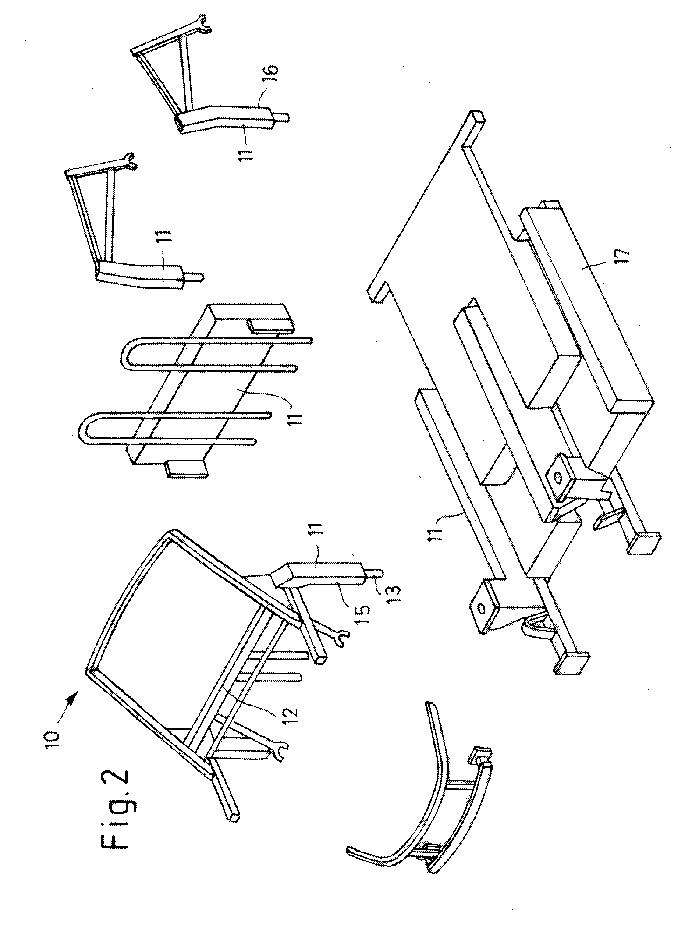

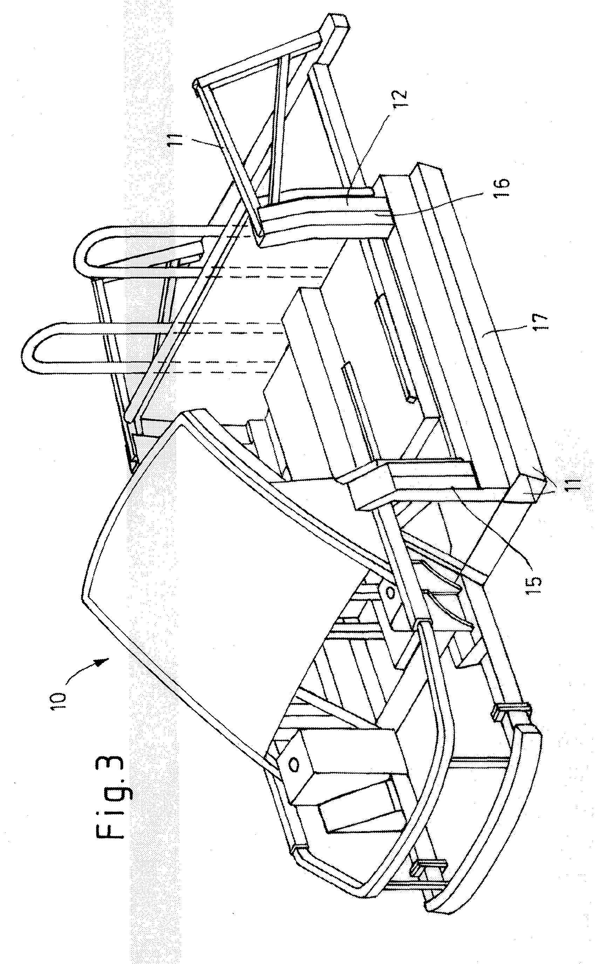

Gemäß dem erfindungsgemäßen Verfahren ist vorgesehen, daß die einzelnen Fahrzeugrahmenteile 11 vor ihrer Verbindung bereits teilweise oder vollständig bearbeitet und/oder ausgerüstet werden und daß die anschließende Verbindung der einzelnen Fahrzeugrahmenteile 11 durch elektromagnetisches Fügen erzeugt wird. Es ist dazu in der Fig. 2 der Zeichnung eine Fahrzeugtragrahmenanordnung 10 vor dem Zusammenfügen nach dem erfindungsgemäßen Verfahren perspektivisch dargestellt, in der Fig. 3 der Zeichnung ist entsprechend eine Fahrzeugtragrahmenanordnung 10 nach dem Zusammenfügen nach dem erfindungsgemäßen Verfahren perspektivisch dargestellt.

Bei dem erfindungsgemäßen Verfahren wird bevorzugt durch das elektromagnetische Fügen eine Verbindung der einzelnen Fahrzeugrahmenteile 11 aus extrudierten Aluminium- Profilen 12 erzeugt. Es läßt sich dieses Verfahren bei der Herstellung von Aluminiumtragrahmenstrukturen besonders vorteilhaft anwenden, wobei insb. die hohe elektrische Leitfähigkeit des Aluminiums in diesem Fall vorteilhaft ist, wobei mit steigender Leitfähigkeit des Materials das Verfahren um so effektiver wird.

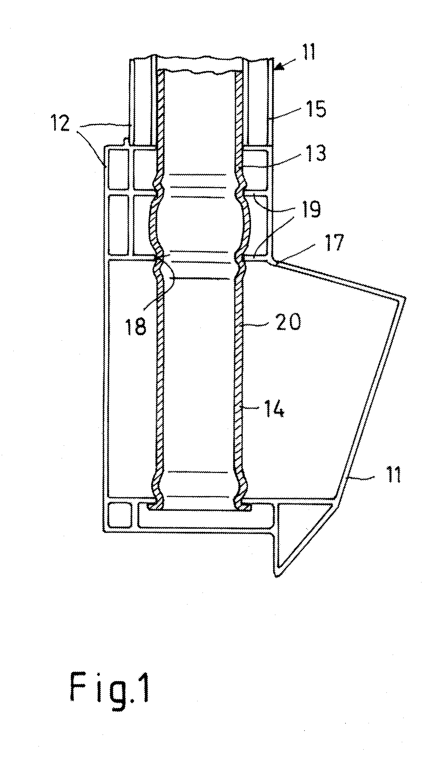

Weiterhin ist bei den in den Fig. der Zeichnung beispielhaft dargestellten Verbindungsstellen vorgesehen, daß die Verbindung der einzelnen Fahrzeugrahmenteile 11 durch elektromagnetisches Fügen unter Verwendung eines zusätzlichen, beim elektromagnetischen Fügen expandierenden Verbindungselementes 13 erfolgt. Dies kann in der Weise erfolgen, daß die Verbindung der einzelnen Fahrzeugrahmenteile 11 durch elektromagnetisches Fügen unter Verwendung eines als verankertes Dorn element 14 ausgebildeten zusätzlichen Verbindungselementes 13 erfolgt. Ein solches als verankertes Dornelement 14 ausgebildetes zusätzliches Verbindungselement 13 ist z.B. in der Fig. 1 gezeigt, es wird hierauf nachfolgend näher eingegangen. Durch diese Unterstützung des Verbindens der beiden Komponenten durch das als verankertes Dornelement 14 ausgebildete zusätzliche Verbindungselement 13 wird eine vorherige Bearbeitung der zu verbindenden Komponenten, u.a. z.B. der A- oder B-Säule 15,16, im wesentlichen überflüssig, weiterhin ergeben sich Erleichterungen bzgl. der Ausführung der Toleranzen. Als Ausgangspunkt für dieses zusätzliche Verbindungselement 13 können ebenso wie für die zu verbindenden Profile 12 auf Länge geschnittene extrudierte Al- Profile verwendet werden.

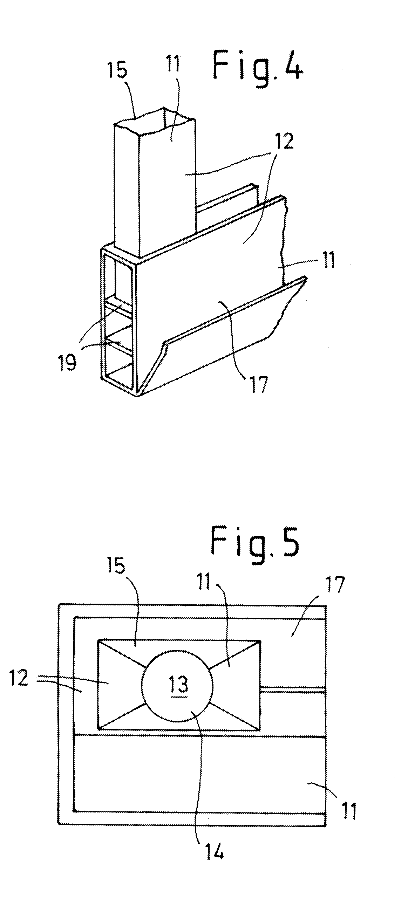

Bei der in der Fig. 1 dargestellten, nach dem erfindungsgemäßen Verfahren hergestellten Verbindungsstelle wird die A- Säule 15 einer Fahrzeugkarosserie durch elektromagnetisches Fügen an dem Fahrgestellrahmen 17 des Fahrzeuges befestigt, und zwar, wie erwähnt, unter Verwendung eines als verankertes Dorn element 14 ausgebildeten zusätzlichen Verbindungselementes 13. In analoger Weise könnte z.B. auch die B- Säule 16 einer Fahrzeugkarosserie durch elektromagnetisches Fügen an dem Fahrgestellrahmen 17 des Fahrzeuges befestigt werden, es ist dies in den Fig. 3 und 4 der Zeichnung schematisch angedeutet. Bei dieser Ausführungsform expandiert das zusätzliche Verbindungselement 13 beim elektromagnetischen Fügen sowohl in der A- und/oder B- Säule 15,16 als auch in dem Fahrgestellrahmen 17. Es kann dabei bei einer ersten Ausführungsform das Expandieren des zusätzlichen Verbindungselementes 13 beim elektromagnetischen Fügen sowohl in der A- und/oder B- Säule als auch in dem Fahrgestellrahmen 17 sequentiell erfolgen, bei einer anderen Ausführungsform kann das Expandieren des zusätzlichen Verbindungselementes 13 beim elektromagnetischen Fügen sowohl in der A- und/oder B- Säule als auch in dem Fahrgestellrahmen 17 gleichzeitig erfolgen.

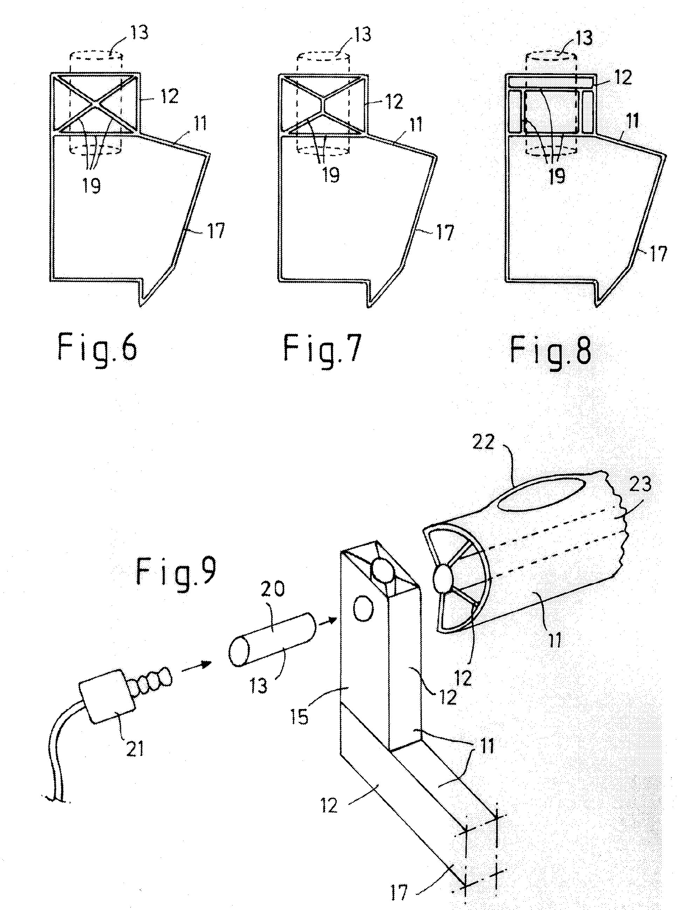

Bei der in der Fig. 1 dargestellten, nach dem erfindungsgemäßen Verfahren hergestellten Verbindungsstelle zwischen A- Säule 15 und Fahrgestellrahmen 17 wird, siehe dazu auch die Fig. 4 und 5 der Zeichnung, die A- Säule 15 mit einem solchen Querschnitt versehen, der zur leichten Aufnahme des zusätzlichen Verbindungselementes 13 vor dem Expandieren beim elektromagnetischen Fügen geeignet ist. Gleiches kann z.B. auch wieder für die B- Säule 16 gelten. Dabei wird außerdem, siehe wieder die Fig. 1, der Fahrgestellrahmen 17 im Verbindungsbereich mit wenigstens einer Ausnehmung 18 versehen, die zur Aufnahme des zusätzlichen Verbindungselementes 13 vor dem Expandieren beim elektromagnetischen Fügen geeignet ist. Da der Vorgang des elektromagnetischen Fügens relativ unempfindlich ist, ist ein derartiges Positionieren des zusätzlichen Verbindungselementes 13 in den Profilen der zu verbindenden Komponenten unkritisch. Bei der gezeigten Verbindungsstelle wird weiterhin der Fahrgestellrahmen 17 im wesentlichen im Verbindungsbereich mit einer Anzahl im wesentlichen horizontal verlaufender Wände 19 versehen, so daß die Verbindung eine hohe Festigkeit erhält. Es kann dabei zur Optimierung der Verbindungseigenschaften wie Torsionsfestigkeit, Steifigkeit etc. der Querschnitt des Fahrgestellrahmens 17 in diesem Bereich unterschiedlich ausgebildet sein, siehe die Darstellungen in den Fig. 6, 7 und 8 der Zeichnung. Es weist der Fahrgestellrahmen 17 in der Fig. 6 in diesem Bereich einen kreuzartigen Querschnitt auf, in der Fig. 7 einen annähernd kreuzartigen Querschnitt mit kurzem Mittelsteg und in Fig. 8 einen Querschnitt mit mehreren Rechtecken unterschiedlicher Größe.

Bei der in den Fig. 4 und 5 dargestellten, nach dem erfindungsgemäßen Verfahren hergestellten Verbindungsstelle zwischen A- Säule 15 und Fahrgestellrahmen 17 wird das zusätzliche Verbindungselement 13 vor dem elektromagnetischen Fügen zusammen mit der A- Säule 15 in den Fahrgestellrahmen 17 eingesetzt. Dadurch erhält die Verbindungsstelle eine größere Steifigkeit.

Bei den in den Fig. dargestellten Verbindungsstellen wird als zusätzliches Verbindungselement 13 eine extrudierte Hülse 20, bevorzugt aus Aluminium, vorgesehen, die beim elektromagnetischen Fügen in dem jeweiligen Profil expandiert. Solch eine Hülse 20 läßt sich einfach in die zu verbindenden Komponenten einsetzen, wobei sich nach dem Expandieren der Hülse 20 in dem Profil 12 gleichzeitig eine gute Torsionsfestigkeit ergibt.

Bei der in Fig. 4 und 5 dargestellten Verbindung wird durch die Steganordnung in der A- Säule 15 ein Expandieren des zusätzlichen Verbindungselementes 13 an bestimmten Umfangsbereichen verhindert, wodurch sich ein Ineinandergreifen von A-Säule 15 und zusätzlichem Verbindungselement 13 ergibt.

Bei einer zweckmäßigen Ausführungsform des erfindungsgemäßen Verfahrens wird der Fahrgestellrahmen 17 derart vorgefertigt, daß das zusätzliche Verbindungselement 13 und ggfs. die A- und/oder B- Säule 15,16 von oben her gesehen angebracht werden können, wobei bevorzugt zunächst das zusätzliche Verbindungselement 13 in den Fahrgestellrahmen 17 eingesetzt wird und danach die A- und/oder B- Säule 15,16 auf das zusätzliche Verbindungselement 13 aufgesetzt wird. Es wird danach, ähnlich wie in Fig. 9 dargestellt, die eine abweichende Ausführungsform zeigt, auf die später eingegangen wird, das Betätigungselement 21 für das elektromagnetische Fügen in das zusätzliche Verbindungselement 13 zu dessen Expandieren in der A- und/oder B- Säule 15,16 und in dem Fahrgestellrahmen 17 eingeführt. Das Betätigungselement 21 für das elektromagnetische Fügen kann dabei z.B. als Magnetspule ausgebildet sein. Dabei können bei einer Ausführungsform beide Verbindungen, A- und/oder B- Säule 15,16 mit zusätzlichem Verbindungselement 13 bzw. Fahrgestellrahmen 17 mit zusätzlichem Verbindungselement 13, in derselben Bearbeitungsvorrichtung gleichzeitig erzeugt werden. Bei einer anderen Ausführungsform können beide Verbindungen, A- und/oder B- Säule 15,16 mit zusätzlichem Verbindungselement 13 bzw. Fahrgestellrahmen 17 mit zusätzlichem Verbindungselement 13, separat in derselben Bearbeitungsvorrichtung oder in unterschiedlichen Bearbeitungsvorrichtungen erzeugt werden.

Bei der in der Fig. 9 gezeigten Verbindungsstelle wird die A- Säule 15 einer Fahrzeugkarosserie durch elektromagnetisches Fügen an dem in einer Instrumententafel 22 integrierten, dem Fahrzeugaufbau zusätzliche Steifigkeit verleihenden, Querträger 23 eines Fahrzeuges befestigt. Dabei wird das zusätzliche Verbindungselement 13 durch die A- Säule 15 hindurch in den Querträger 23 eingesetzt und dort durch Expandieren beim elektromagnetischen Fügen fixiert. Dabei ergibt sich eine saubere und schnelle Verbindung mit einer hohen Steifigkeit ohne die Verwendung von Befestigungsmitteln wie Schrauben od. dgl., die im übrigen auch klapperfrei ist. Bei der Darstellung in Fig. 9 ist dazu das Betätigungselement 21 für das elektromagnetische Fügen schematisch dargestellt, das in das zusätzliche Verbindungselement 13 zum elektromagnetischen Fügen einzuführen ist, weiterhin dargestellt ist unterseitig ein Teil eines Profiles 12 des Fahrgestellrahmens 17. Selbstverständlich kann das erfindungsgemäße Verfahren auch zur Verbindung von anderen als dem dargestellten Querträger 23 verwendet werden.

Bei dem erfindungsgemäßen Verfahren ist bevorzugt vorgesehen, daß die einzelnen zu verbindenden Fahrzeugrahmenteile 11 vor dem elektromagnetischen Fügen fertig lackiert werden, d.h. es erübrigt sich nach dem Verbinden eine diesbezügliche Nachbehandlung. Weiterhin ist alternativ oder ergänzend vorgesehen, daß die einzelnen zu verbindenden Fahrzeugrahmenteile 11 vor dem elektromagnetischen Fügen fertig mit Verkleidungselementen versehen werden, so daß sich auch hier nach dem Verbinden eine diesbezügliche Nachbehandlung erübrigt.

Bei dem erfindungsgemäßen Verfahren ist weiterhin vorgesehen, daß bei allen in Betracht kommenden Verbindungsstellen zusätzlich zu der Verbindung der einzelnen Fahrzeugrahmenteile 11 durch elektromagnetische s Fügen eine Verbindung der einzelnen Fahrzeugrahmenteile 11 durch Verklebung erzeugt we rden kann. Eine solche zusätzliche Verbindung über eine Verklebung ist in mehrerer Hinsicht vorteilhaft, so bildet die Verklebung als Verbindungsart eine einheitliche Lösung für die zu verbindenden Teile in einer sauberen und kalten, d.h. ohne Wärme produzierenden, Weise, weiterhin ergibt sich hier durch das zusätzliche Vo rsehen einer Verklebung an der Verbindungsstelle eine verbesserte Steifigkeit, Festigkeit, sowie verbesserte Alterungseigenschaften und verbesserte Crash- Eigenschaften im Vergleich zu anderen Arten der Verbindung.

Bei einer bevorzugten Variante dieser Ausführungsform kann diese zusätzliche Verbindung der einzelnen Fahrzeugrahmenteile 11 durch Verklebung vor der Erzeugung der Verbindung der einzelnen Fahrzeugrahmenteile 11 durch elektromagnetisches Fügen erzeugt werden , bei einer alternativen Variante dieser Ausführungsform kann die zusätzliche Verbindung der einzelnen Fahrzeugrahmenteile 11 durch Verklebung nach der Erzeugung der Verbindung der einzelnen Fahrzeugrahmenteile 11 durch elektromagnetisches Fügen erzeugt werden. Es ist dazu in der Fig. 1 der Zeichnung beispielhaft ein zwischen der A-Säule 15 und dem Fahrgestellrahmen 17 befindliches, mit 24 bezeichnetes Klebemittel dargestellt, das z.B. vor der Erzeugung der Verbindung dieser beiden Fahrzeugrahmenteile 11 durch elektromagnetisches Fügen auf die A- Säule 15 aufgebracht werden kann. Die A- Säule wird dann in dem Fahrgestellrahmen 17 positioniert, danach wird dann das zusätzliche Verbindungselement 13 beim elektromagnetischen Fügen expandiert.

Die zusätzliche Verbindung der einzelnen Fahrzeugrahmenteile 11 durch Verklebung kann dabei z.B. unter Zuführung eines Einkomponenten- Klebemittels erfolg en, alternativ oder ergänzend dazu kann nach einem anderen Ausgestaltungsmerkmal dieser Ausführungsform aber auch die zusätzliche Verbindung der einzelnen Fahrzeugrahmenteile 11 durch Verklebung unter Zuführung eines Mehrkomponenten- Klebemittels erfolgen.

Schließlich ist gemäß dem erfindungsgemäßen Verfahren weiterhin noch vorgesehen, daß zusätzlich zu der Verbindung der einzelnen Fahrzeugrahmenteile 11 durch elektromagnetisches Fügen eine Verbindung der einzelnen Fahrzeugrahmenteile 11 durch eine andere Verbindungsart, wie z.B. Schrauben, Nieten, Schweißen od. dgl. erzeugt werden kann. Hierdurch lassen sich ebenfalls insb. die Steifigkeits- und Festigkeitseigenschaften an der Verbindungsstelle sowie die Funktionseigenschaften des Gesamtaufbaus im allgemeinen verbessern.

Mit dem erfindungsgemäßen Verfahren wird die Möglichkeit geschaffen, die bereits teilweise oder vollständig bearbeiteten und/oder ausgerüsteten Fahrzeugrahmenteile 11 in einem Kaltverbindungsprozeß einfach und funktionsgerecht miteinander zu verbinden. Da das erfindungsgemäße Verfahren im wesentlichen bei Raumtemperatur stattfindet, nicht kontaktbehaftet ist und sich insb. bei dreidimensionalen Bauteilevariationen sehr gut anwenden läßt, ist es besonders gut für die Verbindung von vorgefertigten Fahrzeugrahmenteilen 11 zum Aufbau von Fahrzeugtragrahmenanordnungen 10 einsetzbar. Das erfindungsgemäße Verfahren ist dabei einfach und funktionsgerecht durchführbar und außerdem vielseitig anwendbar.

Es sei ausdrücklich darauf hingewiesen, daß das erfindungsgemäße Verfahren keineswegs auf die dargestellten bzw. beschriebenen Anwendungsfälle beschränkt ist, es lassen sich vielmehr alle möglichen z.B. Al.- Extrusionsprofile einer Fahrzeugkarosserie über elektromagnetisches Fügen miteinander verbinden. Dabei kann das Design gemäß den Anforderungen der für die einzelnen Verbindungspunkte spezifischen Kräfte und Momente modifiziert werden. Weiterhin ist vorgesehen, andere Materialien für die Profile 12 zu verwenden wie z.B.

Hochfestigkeitstahl oder Legierungen. Man wird dabei allerdings das zusätzliche Verbindungselement 13 aus Aluminium bestehend wegen der guten Leitfähigkeit beibehalten.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann das erfindungsgemäße Verfahren zur Verbindung von Fahrzeugkarosserieteilen beliebiger Art verwendet werden, insb. auch zum Aufbau von abweichenden Arten von Fahrzeugen. Weiterhin vorgesehen sind Abwandlungen bei der Durchführung des Verfahrens, und zwar insb. bzgl. des Einbringens des Betätigungselementes 21 für das elektromagnetische Fügen und bzgl. der Ausbildung der Verbindung selber.

### BEZUGSZEICHENLISTE

- 10: Fahrzeugtragrahmenanordnung
- 11: Fahrzeugrahmenteil
- 12: extrudiertes Profil
- 13: zusätzliches Verbindungselement
- 14: verankertes Dornelement (in 15,16)
- 15: A- Säule
- 16: B- Säule
- 17: Fahrgestellrahmen
- 18: Ausnehmung (in 17 für 13)
- 19: horizontal verlaufende Wand (in 17)
- 20: extrudierte Hülse
- 21: Betätigungselement für elektromagnetisches Fügen
- 22: Instrumententafel
- 23: Querträger (in 22)
- 24: Klebemittel

## Patentansprüche

1. Verfahren zum Verbinden zweier Fahrzeugrahmenteile (11) für Fahrzeuge aller Art, insb. für Kraftfahrzeuge, wobei die Fahrzeugrahmenteile (11) zum Aufbau einer Fahrzeugtragrahmenanordnung (10) mit wesentlichen Bestandteilen aus extrudierten Profilen (12) ausgebildet sind,
**dadurch gekennzeichnet, daß**
die einzelnen Fahrzeugrahmenteile (11) vor ihrer Verbindung bereits teilweise oder vollständig bearbeitet und/oder ausgerüstet werden und daß die anschließende Verbindung der einzelnen Fahrzeugrahmenteile (11) durch elektromagnetisches Fügen erzeugt wird.

2. Verfahren nach Anspruch 1,
**dadurch gekennzeichnet, daß**
durch das elektromagnetische Fügen eine Verbindung der einzelnen Fahrzeugrahmenteile (11) aus extrudierten Aluminium- Profilen (12) erzeugt wird.

3. Verfahren nach Anspruch 1 oder 2,
**dadurch gekennzeichnet, daß**
die Verbindung der einzelnen Fahrzeugrahmenteile (11) durch elektromagnetisches Fügen unter Verwendung eines zusätzlichen, beim elektromagnetischen Fügen expandierenden Verbindungselementes (13) erfolgt.

4. Verfahren nach Anspruch 3,
**dadurch gekennzeichnet, daß**
die Verbindung der einzelnen Fahrzeugrahmenteile (11) durch elektromagnetisches Fügen unter Verwendung eines als verankertes Dornelement (14) ausgebildeten zusätzlichen Verbindungselementes (13) erfolgt.

5. Verfahren nach einem der Ansprüche 1 bis 4,
**dadurch gekennzeichnet, daß**
die A- und/oder B- Säule (15,16) einer Fahrzeugkarosserie durch elektromagnetisches Fügen an dem Fahrgestellrahmen (17) des Fahrzeuges befestigt wird.

6. Verfahren nach Anspruch 5,
**dadurch gekennzeichnet, daß**
das zusätzliche Verbindungselement (13) beim elektromagnetischen Fügen sowohl in der A- und/oder B- Säule (15,16) als auch in dem Fahrgestellrahmen (17) expandiert.

7. Verfahren nach Anspruch 6,
**dadurch gekennzeichnet, daß**
das Expandieren des zusätzlichen Verbindungselementes (13) beim elektromagnetischen Fügen sowohl in der A- und/oder B- Säule als auch in dem Fahrgestellrahmen (17) sequentiell erfolgt.

8. Verfahren nach Anspruch 6,
**dadurch gekennzeichnet, daß**
das Expandieren des zusätzlichen Verbindungselementes (13) beim elektromagnetischen Fügen sowohl in der A- und/oder B- Säule als auch in dem Fahrgestellrahmen (17) gleichzeitig erfolgt.

9. Verfahren nach einem der Ansprüche 5 bis 8,
**dadurch gekennzeichnet, daß**
die A- und/oder B- Säule (15/16) mit einem solchen Querschnitt versehen wird, der zur leichten Aufnahme des zusätzlichen Verbindungselementes (13) vor dem Expandieren beim elektromagnetischen Fügen geeignet ist.

10. Verfahren nach einem der Ansprüche 5 bis 9,
**dadurch gekennzeichnet, daß**
der Fahrgestellrahmen (17) im Verbindungsbereich mit wenigstens einer Ausnehmung (18) versehen wird, die zur Aufnahme des zusätzlichen Verbindungselementes (13) vor dem Expandieren beim elektromagnetischen Fügen geeignet ist.

11. Verfahren nach einem der Ansprüche 5 bis 10,
**dadurch gekennzeichnet, daß**
der Fahrgestellrahmen (17) im wesentlichen im Verbindungsbereich mit einer Anzahl im wesentlichen horizontal verlaufender Wände (19) versehen wird, so daß die Verbindung eine hohe Festigkeit erhält.

12. Verfahren nach einem der Ansprüche 5 bis 11,
**dadurch gekennzeichnet, daß**
das zusätzliche Verbindungselement (13) vor dem elektromagnetischen Fügen zusammen mit der A- und/oder B- Säule (15,16) in den Fahrgestellrahmen (17) eingesetzt wird.

13. Verfahren nach einem der Ansprüche 3 bis 12,
**dadurch gekennzeichnet, daß**
als zusätzliches Verbindungselement (13) eine extrudierte Hülse (20), bevorzugt aus Aluminium, vorgesehen wird, die beim elektromagnetischen Fügen in dem jeweiligen Profil expandiert.

14. Verfahren nach Anspruch 13,
**dadurch gekennzeichnet, daß**
durch die Steganordnung in der A- und/oder B- Säule (15,16) ein Expandieren des zusätzlichen Verbindungselementes (13) an bestimmten Umfangsbereichen verhindert wird, wodurch sich ein Ineinandergreifen von A - und/oder B- Säule (15,16) und zusätzlichem Verbindungselement (13) ergibt.

15. Verfahren nach einem der Ansprüche 5 bis 14,
**dadurch gekennzeichnet, daß**
der Fahrgestellrahmen (17) derart vorgefertigt wird, daß das zusätzliche Verbindungselement (13) und ggfs. die A- und/oder B- Säule (15,16) von oben her gesehen angebracht werden können, wobei bevorzugt zunächst das zusätzliche Verbindungselement (13) in den Fahrgestellrahmen (17) eingesetzt wird und danach die A- und/oder B- Säule (15,16) auf das zusätzliche Verbindungselement (13) aufgesetzt wird.

16. Verfahren nach einem der Ansprüche 5 bis 15,
**dadurch gekennzeichnet, daß**
das Betätigungselement (21) für das elektromagnetische Fügen in das zusätzliche Verbindungselement (13) zu dessen Expandieren in der A- und/oder B- Säule (15,16) und in dem Fahrgestellrahmen (17) eingeführt wird.

17. Verfahren nach Anspruch 16,
**dadurch gekennzeichnet, daß**
beide Verbindungen, A- und/oder B- Säule (15,16) mit zusätzlichem Verbindungselement (13) bzw. Fahrgestellrahmen (17) mit zusätzlichem Verbindungselement (13), in derselben Bearbeitungsvorrichtung gleichzeitig erzeugt werden.

18. Verfahren nach Anspruch 16,
**dadurch gekennzeichnet, daß**
beide Verbindungen, A- und/oder B- Säule (15,16) mit zusätzlichem Verbindungselement (13) bzw. Fahrgestellrahmen (17) mit zusätzlichem Verbindungselement (13), separat in derselben Bearbeitungsvorrichtung oder in unterschiedlichen Bearbeitungsvorrichtungen erzeugt werden.

19. Verfahren nach einem der vorhergehenden Ansprüche,
**dadurch gekennzeichnet, daß**
die A- Säule (15) einer Fahrzeugkarosserie durch elektromagnetisches Fügen an dem in einer Instrumententafel (22) integrierten Querträger (23) eines Fahrzeuges befestigt wird.

20. Verfahren nach einem der vorhergehenden Ansprüche,
**dadurch gekennzeichnet, daß**
die einzelnen zu verbindenden Fahrzeugrahmenteile (11) vor dem elektromagnetischen Fügen fertig lackiert werden.

21. Verfahren nach einem der vorhergehenden Ansprüche,
**dadurch gekennzeichnet, daß**
die einzelnen zu verbindenden Fahrzeugrahmenteile (11) vor dem elektromagnetischen Fügen fertig mit Verkleidungselementen versehen werden.

22. Verfahren nach einem der vorhergehenden Ansprüche,
**dadurch gekennzeichnet, daß**
zusätzlich zu der Verbindung der einzelnen Fahrzeugrahmenteile (11) durch elektromagnetisches Fügen eine Verbindung der einzelnen Fahrzeugrahmenteile (11) durch Verklebung erzeugt wird.

23. Verfahren nach Anspruch 22,
**dadurch gekennzeichnet, daß**
die zusätzliche Verbindung der einzelnen Fahrzeugrahmenteile (11) durch Verklebung vor der Erzeugung der Verbindung der einzelnen Fahrzeugrahmenteile (11) durch elektromagnetisches Fügen erzeugt wird.

24. Verfahren nach Anspruch 22,
**dadurch gekennzeichnet, daß**
die zusätzliche Verbindung der einzelnen Fahrzeugrahmenteile (11) durch Verklebung nach der Erzeugung der Verbindung der einzelnen Fahrzeugrahmenteile (11) durch elektromagnetisches Fügen erzeugt wird.

25. Verfahren nach einem der Ansprüche 22 bis 24,
**dadurch gekennzeichnet, daß**
die zusätzliche Verbindung der einzelnen Fahrzeugrahmenteile (11) durch Verklebung unter Zuführung eines Einkomponenten- Klebemittels erfolgt.

26. Verfahren nach einem der Ansprüche 22 bis 24,
**dadurch gekennzeichnet, daß**
die zusätzliche Verbindung der einzelnen Fahrzeugrahmenteile (11) durch Verklebung unter Zuführung eines Mehrkomponenten- Klebemittels erfolgt.

27. Verfahren nach einem der vorhergehenden Ansprüche,
**dadurch gekennzeichnet, daß**
zusätzlich zu der Verbindung der einzelnen Fahrzeugrahmenteile (11) durch elektromagnetisches Fügen eine Verbindung der einzelnen Fahrzeugrahmenteile (11) durch eine andere Verbindungsart, wie z.B. Schrauben, Nieten, Schweißen od. dgl. erzeugt wird.
